# EUROPEAN PATENT SPECIFICATION

(11) **EP 4 008 162 B1**
(45) Date of publication and mention of the grant of the patent: **01.07.2026**
(21) Application number: 20745241.8
(22) Date of filing: 30.07.2020
(51) Int. Cl.: H05B 6/64, F24C 7/08, H05B 6/12

(54) **COOKING DEVICE**
KOCHVORRICHTUNG
DISPOSITIF DE CUISSON

(30) Priority: 02.08.2019 EP 19189871
(43) Date of publication of application: 08.06.2022
(73) Proprietor: ELECTROLUX APPLIANCES AKTIEBOLAG, 105 45 Stockholm (SE)
(72) Inventor: KLEIN, Gerhard, 91541 Rothenburg ob der Tauber (DE); WUNDLING, Holger, 91541 Rothenburg ob der Tauber (DE); HOFFMANN, Harald, 91541 Rothenburg ob der Tauber (DE); MURGA, Hugo, 111 21 Stockholm (SE); DI NARDO, Alessandro, 10048 Vinovo (IT); KRAUSSE, Constantin, 91541 Rothenburg ob der Tauber (DE); LUCKHARDT, Christoph, 91541 Rothenburg ob der Tauber (DE)
(74) Representative: Electrolux Group Patents
(86) International application number: PCT/EP2020/071542
(87) International publication number: WO 2021/023621

(56) References cited:
- EP-A2- 1 341 158
- WO-A1-2017/062883
- DE-A1- 102017 111 356
- DE-A1- 102018 120 740
- JP-A- S5 930 138

## Description

The present invention relates to a cooking device, a cooking system and a computer program product.

In operating cooking devices, such as ovens, hobs, cooking plates and the like, often the situation arises that it is difficult for the user to make necessary changes in settings of the device, because the user at the same time is manipulating cooking utensils, such as pots and pans, or because the user due to a preceding cooking operation has wetted hands and thus is unable to operate touchscreen elements for operation of the cooking device.

JP S59 30138 A discloses a cooking device according to the preamble of clam 1. Reference is also made to publications EP 1 341 158 A2 and DE 10 2027 111356.

It is an object of the present invention to provide for a cooking device that allows for additional options for control of cooking functions, so as to facilitate the handling of the cooking device.

In accordance with the present invention the above object is solved by a cooking device, especially a hob or a cooking appliance with a door and a cavity, in particular an oven, a microwave or an induction hob, according to claim 1. At the cooking appliance with a door and a cavity, especially an oven or a microwave, the cooking region is the cavity or a part of the cavity. The cooking region of a hob is preferably a variable assignment of one or more induction coils. This means, that the cooking region can be a cooking zone, a part of a cooking zone or more than one coupled cooking zones.

According to the present invention the cooking regions of the cooking device are adjusted by the user's voice commands or the control commands from the remote control device. The communication interface is integrated in the cooking device and receives the voice signals from the user. The receiving voice signals are defined as voice signals coming from the user. That means, that the communication interface can also receive voice signals from the user that have been converted into digital signals from another device. The term "controlling at least one cooking region" as used herein, preferably means that the cooking region may be adjusted by the user, particular in response to his voice commands.

In other words, the cooking device comprises at least one cooking region, means for determining that a user is present, a communication interface for receiving voice signals or data signals from a remote control device, and a control unit coupled to the at least one cooking region and the communication interface, the means for determining that a user is present and communication interface, wherein the control unit is configured for controlling the power supply to the at least one cooking region based on the detection of the presence of a user and the preceding or subsequent receipt of voice signals or data signals from the remote control device by the communication interface.

The cooking device of the present invention allows for voice control or (e.g. wireless) remote control of a cooking region. In order to avoid that the cooking region inadvertently is operated without direct user interaction, such as on receipt of incidentally received sound signals that were not given by a user but originate for example from a broadcast signal or from ambient sounds, the cooking device is equipped with means, for example a proximity sensor, for determining that a user is present. The control unit of the cooking device provides for changes of device settings on receipt of voice signals or data signals from the remote control device only upon confirmation that a user actually is present.

While the cooking device can be configured to check for the presence of a user either continuously or at predetermined time intervals, so as to be able to immediately react on a subsequently received voice signal, the cooking device alternatively or additionally can be configured to check for the presence of a user upon receipt of a voice signal. Alternatively or additionally the cooking device can be configured to accept a voice input for a predetermined time interval upon determining that a user is present.

Before executing a voice command or command from the remote control device, the cooking device of the present invention ascertains that the user is present, **i.e.** that there is a line-of-sight connection between the user and the cooking device, so as to avoid an operation of the cooking device that may provide for undesired or even hazardous results.

The cooking device of the present invention thus enables a safe hands-free operation of the cooking device without the risk of the cooking device changing settings while in fact no user is present.

The control of the power supply of the at least one cooking region that is performed by the control unit involves any change in operating conditions of the at least one cooking region, such as switching on or off a cooking region, changing the power level of a cooking region, changing the size and/or shape of a variable cooking region, combining several cooking regions into a combined cooking region, splitting a cooking region into several smaller cooking regions, setting timer functions, setting the device into a child-safe mode in which changes in devices settings are blocked until the child-safe mode is terminated or interrupted, etc.

Preferred embodiments of the present invention are defined in the dependent claims.

In particular, the control unit can be configured to accept voice signals from the communication interface only within a predetermined time interval between the detection of the presence of a user and the receipt of the said voice signals, such as within a predetermined time interval of between 1 s and 60 s, between 5 s and 40 s, or between 10 s and 30 s. Providing for a predetermined time interval adds to the safety in that it further reduces the chance that a received voice signal does not originate from the user of the cooking system.

According to the embodiment of the invention the cooking device preferably responds to the user after its activation with a signal, especially a sound, a light and/or a digital signal.

In embodiments of the cooking device the control unit can be configured to accept voice signals from the communication interface only upon recognition of a code, such as a code word, by the communication interface. In such embodiments the acceptance of voice commands by the control unit from the communication interface has to be triggered by the user by saying a code word, for example "hob" or "cooker" or "chef". This preferably means that the communication interface of the cooking device is activated with a voice signal, especially a code word. Using code, such as a code word, to start voice operation of a cooking device is of particular advantage when there are several devices that can be controlled by voice commands, such as a hob, an oven, a microwave and a range, wherein by the use of codes it can be differentiated which device is to be operated.

In an embodiment of the cooking device, the control unit is configured to prompt a user to input a code perceptible at the cooking device and to compare a received signal representative of the user's input with the code, the control unit is configured to cause a command from the communication interface to be executed if the received signal is representative of and/or can be assigned to the code and not to be executed if the received signal is neither representative of nor can be assigned to the code, and the code is a randomized code and/or the control unit is configured to access a list of codes, to select the code by selecting at least one of the list of codes at a time and to ensure that the at least one selected code is not used for a pre-determined time frame and/or for at least one further round, e.g. a number of further rounds, of receiving a voice signal as a command from the user or a data signal as a control command from the remote control device and accepting that command only upon recognition of the presence of the user.

The code may be a password or a different type of information. An embodiment ensures that the user is within a line of sight to the cooking device, in that the user is prompted to input a visible code. In any case, because the code is perceptible only at the cooking device, the user cannot be outside the vicinity of the cooking device and guess the code. Where the list of codes is used, this may be a relatively long list, so that the control unit can simply select the next code in the list. The likelihood that a user not within the immediate vicinity of the cooking device is able to guess the code is still relatively low. The code may be any visible aspect of the appearance of part of all of the cooking device. The control unit may be configured to cause the code to be displayed.

In a particular example of the previous embodiment, the code is a password, the control unit is configured to prompt the user to voice the password, and the control unit is configured to receive the signal representative of the user's input from the communication interface.

This embodiment allows the user to confirm a spoken command without touching the cooking device and without requiring a further contactless user input modality. Furthermore, compared to other types of codes such as gestures, colors and the like, the password space can be relatively large, ensuring that the user cannot guess the password. This provides an effective check that the user is actually present at the cooking device.

A particular example of the embodiment in which the control unit is configured to prompt a user to input a code perceptible at the cooking device and to compare a received signal representative of the user's input with the code, the control unit is configured to cause a command from the communication interface to be executed if the received signal is representative of and/or can be assigned to the code and not to be executed if the received signal is neither representative of nor can be assigned to the code, and the code is a randomized code and/or the control unit is configured to access a list of codes, to select the code by selecting at least one of the list of codes at a time and to ensure that the at least one selected code is not used for a predetermined time frame and/or for at least one further round, e.g. a number of further rounds, of receiving a voice signal as a command from the user or a data signal as a control command from the remote control device and accepting that command only upon recognition of the presence of the user, the cooking device further comprises a display, wherein the control unit is configured to cause the code to be displayed on the display.

In this example, the code can be relatively complicated and there can be relatively many different possible codes, such that the code is relatively hard to guess. Furthermore, this embodiment is relatively easy to implement by appropriately programming an otherwise standard cooking device with a display and a communication interface for receiving voice signals or for receiving data signals from a remote control device.

Preferably the cooking device comprises a memory for storing one or more codes, which either can be codes, such as code words, that are predefined by the manufacturer and which can be changed such as in the course of a servicing or update operation, or which can be selectively determined by a user.

In embodiments of the present invention the means for determining that a user is present comprises a display provided at the cooking device, and control means configured to prompt a user to voice a randomized password that is shown at a display of the cooking device and to compare the displayed password with the signal received from the communication interface. That means that the presence of the user is therefore controlled by the control unit that is configured to prompt a user to voice a randomized password that is shown at the display of the cooking device and to compare the displayed password with the signal received from the communication interface. The randomized password that is shown in the display of the cooking device is preferably a word, a sign, a picture, a symbol and/or characters or a combination of these, and the user has to reproduce said randomized password with a voice signal.

In other words, according to the present invention the control unit is configured to access a list of passwords, and to select one password from said list of passwords at a time, particularly and preferably in a randomized manner from said list of passwords and display said password on a display of the cooking device to a user.

The control unit may be configured to display said password for a predetermined time period only. The time period may be between 5 s and 60 s, preferably between 10 s and 40 s, most preferred between 20 s and 30 s. The control unit is further configured to compare a signal, received from the communication interface, with said password and, if the received signal is representative and/or can be assigned to said displayed selected password of the list of passwords, a respective command to change the cooking region or a function of the cooking device is executed. In other words, if the received voice command comprises the selected and displayed password, the command is executed. If the received signal is not representative and/or cannot be assigned to said displayed selected password of the list of passwords, a respective command to change the cooking region or a function of the cooking device is not executed. Preferably, the control unit is displaying that the command will not be executed and/or transfers a respective signal to the voice control device, which may output to the user acoustically that the command is not executed and/or the code could not be verified. In other words, if the received voice command comprises the selected and displayed password, the command is executed. And, if the received voice command does not comprise the selected and displayed password, the command is not executed.

Subsequently, in a further such round of voice recognition, a further password is selected from the list of passwords, which is preferably different from the password selected in the one or predetermined number of previous rounds of passwords. This advantageously increases the probability that an unintentional use of the password or a misuse is prevented.

Preferably the control unit thus secures that the password of the first round is not used for a number of rounds and/or a pre-determined time frame, until it can be reused.

Such a list of passwords is preferably stored in the cooking device, **e.g.** on the control unit and/or a memory connected to the control unit, or alternatively in external memory, particularly in a cloud storage and/or a server memory. In an embodiment the list of passwords is adjustable by a user. Alternatively, the list of passwords may be predefined by the manufacturer and may or may not be changed or adapted by the user.

Particularly, the list of passwords could be adjusted and/or trained by the user. Additionally or alternatively the manufacturer may provide a list of passwords which are unlikely to be used in a standard home environment, particularly in connection with the code, which is used to activate the communication interface.

Particularly the list of passwords may comprise forenames or surnames of cooks, real or non-real persons.

In order to provide for a convenient means for the user to determine a code, the memory can be connected to the communication interface and can be configured to store one or more codes, such as code words, that are recorded by a user.

In embodiments the cooking device comprises said at least one cooking region and said control unit.

While the present invention can be employed with any kind of cooking device, it can be used with particular advantage in a hob, particularly in a hob having a plurality of cooking zones which in preferred embodiments can be varied in size and/or shape and which preferably can be combined with at least one adjacent cooking zone, so as to provide for a further variability in the size and shape of the cooking zones. While in such devices often several cooking zones are used simultaneously, wherein further cooking parameters, such as the power level of individual cooking zones are frequently changed, the ability to adapt the cooking parameters by voice command is particularly helpful because the user needs not interrupt his activities, such as manipulating pots and pans, stirring, manually preparing or handling ingredients etc.

In accordance with the present invention a cooking system is also claimed. The cooking system comprises said cooking device and a voice recognition device and/or a remote control device configured for communication with the control unit via the communication interface. The cooking system may comprise an external voice recognition device that is configured for communication with the control unit via the communication interface.

In such embodiments, the external voice recognition device can be a mobile phone which communicates with the cooking device, such as via a WLAN coupling. While thus the cooking system can take advantage of the audio system of the mobile phone which is employed as voice recognition device, the cooking system also may use further resources of the mobile phone. Thus, for example the voice recognition process can be performed at least in part by the mobile phone, and/or the display of the mobile phone can be used to provide prompts or instructions to the user.

In further preferred embodiments, the external voice recognition device can be part of, or communicate with a smart home system which may be used to control various home devices, such as other kitchen appliances, lighting devices, home entertainment devices and the like.

Such smart home systems thus either may be controlled by a local server which is configured to control devices of an individual home, or may be run by a cloud based server that is used in connection with plural home systems, such as Google Home^{®}, Amazon Echo^{®}, Apple Homepod^{®} or the like, wherein speech assistant programs may be implemented, such as Amazon Alexa^{®} or Apple Siri^{®}, which provide for speech recognition.

In embodiments the communication interface can comprise a microphone that is provided at the cooking device, such as in a frame, housing or hood of the cooking device, in which case also the voice signal processing, i.e. the voice recognition and the generation of respective control signals based on the recognized voice signal, preferably is effected at the cooking device, such as by a signal processing circuit that is part a controller of the device or which is provided as a separate unit that communicates with the controller.

In such embodiments the cooking device thus provides for means for ascertaining a line-of-sight connection between the user and the cooking device by providing for a display at the cooking device which displays randomized changing password, which has to be voiced by the user so as to activate the communication interface of the cooking device.

To provide for an alternative or additional manner of ascertaining a line-of-sight connection between the user, the means for determining that a user is present may comprise a light barrier provided at the cooking device, and control means configured to prompt a user to interrupt the light barrier and to check whether an interruption of the light barrier can be detected within a predetermined time interval. That means that the presence of the user is controlled by the control unit that is configured to prompt a user to interrupt a light barrier provided at the cooking device and to check whether an interruption of the light barrier can be detected within a predetermined time interval.

For example, the light barrier may comprise a transmitter and a receiver, for example an infrared emitter and receiver pair, one element of which is provided at the top of a cooking panel and the other is provided above the cooking panel, for example at the bottom of a range hood. For a use to activate the voice control of the cooking panel, the light barrier can be interrupted by the user waving with a hand or a cooking utensil between transmitter and receiver.

In such embodiments the means for determining that a user is present provides for a gesture recognition, the security level of which can be increased by prompting the user to perform more complex gestures, such as plural passes of the light barrier, or passes of varying duration, such as a short interruption followed by a longer interruption. Furthermore, there may be provided more than one light barrier, so that also the direction of the gesture to be performed by the user can be detected.

The means for determining that a user is present further can comprise various sensing devices, and thus can comprise a proximity sensor, a motion sensor, a touch sensitive element, such as a sensor for measuring conductivity of the user's hand or skin at a surface element of the hob or at the cookware item or a capacitive touch element, or any combination of such elements.

Further to determining that a user is present by detecting the body of a user, such as by a proximity sensor or a motion sensor, the presence of a user can be detected by detecting changes in cookware which is present in a cooking region. That is, the cooking device can comprise cookware detection means for detecting the placement of cookware in at least one cooking region, and the control unit can be configured for controlling the power supply to the at least one cooking region based on the detection of a change in the placement of cookware in the at least one cooking region and the subsequent or preceding receipt of voice signals by the communication interface.

While the cooking device can be configured to check for the presence of a user continuously or at predetermined time intervals, so as to be able to immediately react on a subsequently received voice signal or data signal from the remote control device, in such latter embodiments acceptance of voice signals and/or data signals can be triggered by the placement or movement of cookware onto or within a cooking region.

Such latter embodiments particularly are suited for implementation in an induction hob, in which pot detection easily can be provided for by evaluating the inductive coupling between a cookware item and an induction coil of a cooking region in which the cookware item is placed. In an induction hob with cookware detection, the present invention thus may make use of the cookware detection to identify a newly placed pot or pan and thus ascertain that on the one hand a user is present and that on the other hand the correct cooking region is specified for the application of voice signals that are received by the voice input means. Thus, upon a cookware item having been recognized by the cookware detection means, a timed input interval can be triggered in which a user can provide for voice input signals and/or data signals from the remote control device, wherein also the cooking region to which the voice input signals or data signals are applied is determined by the cookware detection means.

In such latter embodiments the cooking device can comprise at least two cooking regions, wherein the control unit is configured to apply the voice signals or data signals received by the communication interface to the cooking region for which a change in the placement of cookware has been detected last. Thus, if it is detected that cookware is shifted from one cooking region to another cooking region, a voice signal or data signal that is received by the communication interface is applied to the cooking region to which the cookware has been shifted.

In further embodiments, the cookware detection means can be configured for detecting a change in placement of cookware in the at least one cooking region, such as sliding, shifting, lifting, jarring, shaking, and the like. Thus, if more than one cookware items are simultaneously heated, a voice command such as a spoken power level or data signal from the remote control device representative of a power level can be assigned to a cooking zone by providing for a movement of the cookware item that is located in such cooking zone.

The above described embodiments of the present invention that use a cookware detection means can be easily implemented when the cooking region comprises an induction coil, in which case the cookware detection means can be implemented by means for measuring the capacitance of the induction coil.

In such latter embodiments the present invention provides for an advantageous combination of cookware detection means as often present in modern induction hobs, with voice control or remote control user philosophy.

In particular, in accordance with the present invention the cookware detection means can be used to detect a piece of cookware being placed on a certain cooking region, such as a cooking zone, an induction coil, or a cooking area, or is moved within such cooking region. Upon detection of the presence of a cookware item, the hob may allow for a certain time interval voice control and/or control by means of a remote control device to adjust a parameter to be applied with the respective cooking region, such as the power level. The acceptance of voice signals and/or remote control device data signals is limited for a pre-determined time interval so as to secure that the user is present at the hob. While such predetermined time interval serves to ascertain a timely relationship of the detection of the presence of a user and the receipt of voice commands, the sequence of user presence detection and voice command receipt of also can be reversed, i.e. upon receipt of a voice command or remote control device command, the hob checks whether within a certain time interval the presence of a user can be detected, and if so applies the voice command or remote control device command for the respective cooking region.

In preferred embodiments, the pot detection means may detect a movement of a cookware item, e.g. a sliding, lifting, jarring, shaking, such as it may be applied to a pan during a frying procedure. Also in such embodiments the hob control allows to adjust or set cooking zone specific parameters, such as cooking level, time, etc., for a limited time interval. This allows the device control to assign the recognized voice command or command from the remote control device to the correct cooking zone, i.e. the cooking zone where the movement has been detected last.

The cooking device of the present invention thus not only restricts the application of voice signals or remote control device signals to situations in which a user is present so as to ascertain device safety. Further, in the present cooking device which particularly may comprise a hob having several cooking regions the voice input signals are reliably applied to the cooking region in which movement of the respective cookware item is detected. Thus, also in situations in which plural cookware items are heated simultaneously, the voice input signals or remote control device signals can be reliably assigned to the correct cooking region.

Whereas in embodiments in which the presence of a user is detected by a detection of movement of cookware, which at the same time allows to assign a received voice command or control command from a remote control device to a cooking region, i.e. to the cooking region in which the movement was detected, in embodiments in which the presence of a user is detected in a different manner, for example by means of a proximity sensor, in certain situations specifying a cooking region in which to apply a voice command or control command from a remote control device can be omitted.

That is, while in a cooking device having more than one cooking region, the control unit will be configured to assign voice commands or control commands from a remote control device for changing parameters to a particular cooking region on receipt of a respective voice command or control command that designates the respective cooking region, such as when the user says "front left 7", "rear right 3", "front center off" etc., the cooking device can be configured to apply voice commands or control commands from a remote control device to a particular cooking region also without specifying the cooking region in case that only one cooking region is in operation. Thus, if for example in a hob having more than one cooking region one of the cooking regions is operating at power level 3 and the user wants to raise the power level to 5, the hob can be configured to accept the simple voice command or remote control device command "5" to change the power level of the active cooking region. Similarly, if in a hob having more than one cooking regions a first cooking region is operating at power level 3 and a second cooking region is operating at power level 5, and the user wants to raise the power level of the first cooking region to 6, the hob can be configured to accept a voice command or remote control device command such as "3 to 6" to correspondingly change the power level of the first cooking region.

Further to accepting power levels, the cooking system can be configured to accept voice commands or control commands from a remote control device for switching variable cooking zones, such as "front left large" or "combine left zones", for setting timer functions, such as "front left off in 15 minutes" or "front rear 1 in 10 minutes", etc.

Whereas generally the cooking system can be configured to only accept a set of predefined commands, preferably the cooking system is configured to accept various versions of the same command such as "front left 2", "set left front plate to 2", "2 in front left zone", "change left front zone to 2", etc.

In embodiments comprising detection means for detecting the placement of an item of cookware in at least one cooking region, the acceptance of a command may still be subject to input of a code, e.g. a password, by a user that is representative of and/or can be assigned to a code perceptible at the cooking device that the user is prompted to input. Detection of a change of placement of an item of cookware into a cooking region or movement of an item of cookware within a cooking region may trigger the prompt and/or be used to determine which cooking region to apply an accepted command to.

The invention will be explained in further detail with reference to the accompanying drawings, in which:
Fig. 1 is a schematic view of a cooking device;
Fig. 2 is a block diagram illustrating components of a cooking device; and
Fig. 3 is a schematic flow chart showing steps in method that a control unit of the cooking device is configured to carry out.

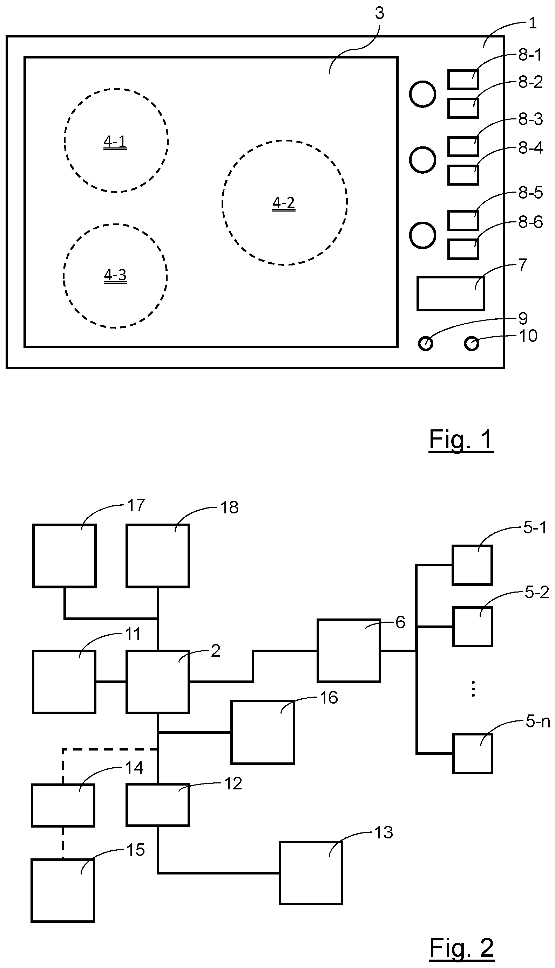

An example of a cooking device 1, in this case in the form of a hob, e.g. an induction hob, comprises a control unit 2 (Fig. 2) and a cooking area 3 (Fig. 1) in which cooking regions 4-1,4-2,4-3 are at least definable. An item of cookware (not shown) can be placed on any of the cooking regions 4-1,4-2,4-3. The cooking regions 4-1,4-2,4-3 may be predefined or variable. In the latter case, a cooking region corresponds to a contiguous section of the cooking area 3 occupied by an item of cookware as detected by the cooking device 1.

The cooking device 1, when embodied as an induction hob, comprises a plurality of induction coils 5-1,5-2,...5-n and a driver 6 for supplying power to the induction coils 5-1,5-2,...5-n. The control unit 2 is configured to control the driver 6 and thus the power supply to the cooking regions 4-1,4-2,4-3.

The induction coils 5-1,5-2,...5-n and driver 6 may be used to detect the presence and area covered by an item of cookware. Thus, the control unit 2 is able to detect the placement of an item of cookware on a cooking region 4-1,4-2,4-3, movement of the item of cookware from one of the cooking regions 4-1,4-2,4-3 to another and movement of the item of cookware whilst essentially remaining within the cooking region 4-1,4-2,4-3, e.g. due to a user handling the item of cookware. Additional or alternative sensors may be present to detect each of these types of movement and/or handling of an item of cookware present in a particular cooking region 4-1,4-2,4-3.

The illustrated cooking device 1 comprises a display 7.

The illustrated cooking device 1 further comprises cooking region-specific output devices 8-1,...8-6, e.g. for displaying a power level and/or temperature of the respective associated cooking regions 4-1,4-2,4-3.

The illustrated cooking device 1 comprises an on/off switch 9 and a voice control switch 10.

The illustrated cooking device 1 further comprises a non-volatile memory device 11 for storing data.

In the illustrated embodiment, the cooking device 1 comprises an interface 12 to an external voice recognition device 13. The external voice recognition device 13 may be a mobile phone or a device that is comprised in or communicates with a smart home system or a remote control station.

The illustrated cooking device 1 comprises an (optional) further interface 14 to a remote control device 15 other than a voice-operated remote control device 15. The remote control device 15 may be a remote control device 15 having a human-machine interface for manipulation by a user, i.e. requiring at least some form of manipulation by hand to complete an input. The remote control device 15 may be a programmed universal remote control device 15, e.g. a programmed handheld computing device such as a smart phone.

The further interface 14 may be a wireless interface forming a node in a Local Area Network or Personal Area Network, for example.

In the illustrated embodiment, the cooking device 1 additionally comprises a microphone 16 and is configured with voice recognition functionality enabling the cooking device 1 to parse voice commands received by means of the microphone 16. In an alternative embodiment, the voice recognition functionality is provided by an external computing device (not shown), which the cooking device 1 is configured to communicate with. In such an embodiment, the external computing device is configured to process a sound signal originating from the microphone 16, which may be converted into digital format and/or compressed by the cooking device 1. A signal representative of the command is returned to the cooking device 1.

In the illustrated embodiment, the cooking device 1 additionally comprises a transmitter 17 and receiver 18 for providing a light barrier and detecting interruption of the light barrier by a user. Multiple such light barriers may be provided, e.g. in different areas. The transmitter 17 and receiver 18 may be omitted in other embodiments.

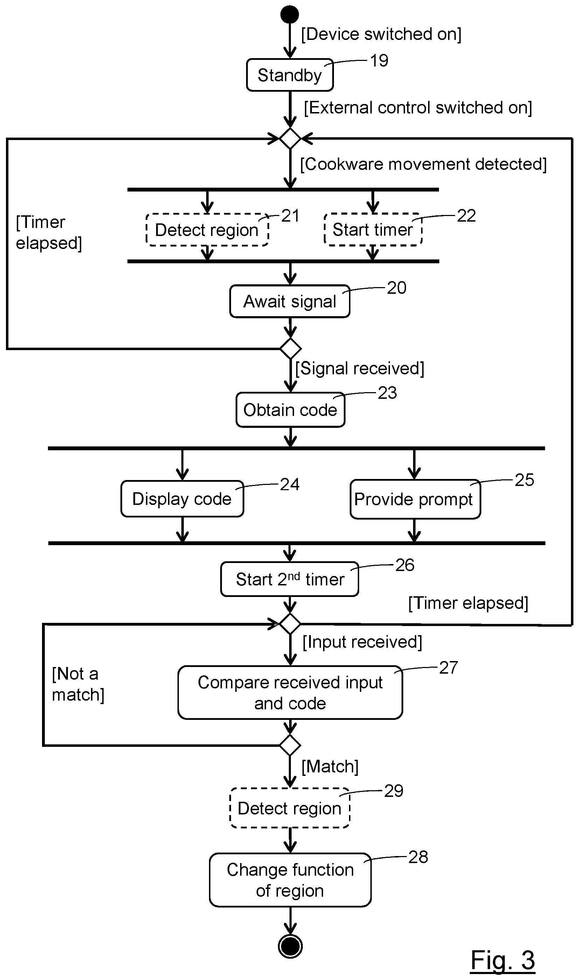

The control unit 2 is configured to carry out a method of processing voice commands and/or commands from the remote control device 15, an example of which is shown (Fig. 3).

When a user manually switches on the cooking device 1, the cooking device 1 enters (step 19) into a standby mode. This may be indicated visually.

When the user manually switches on the external control functionality, the cooking device 1 enters a state in which the cooking device 1 at least awaits (step 20) a voice signal or data signal from the remote control device 15. The voice signal may be provided via the microphone 16 or the external voice recognition device 13.

In an embodiment, the step 20 requires a trigger corresponding to placement of an item of cookware into a cooking region 4-1,4-2,4-3 from which the item of cookware was previously absent or handling of an item of cookware within a cooking region 4-1,4-2,4-3. When such a trigger is received, the cooking device 1 may detect (step 21) the cooking region 4-1,4-2,4-3 concerned. The cooking device 1 may additionally start (step 22) a timer. If the voice signal or remote control device signal is not received or confirmed before a certain time period has elapsed, the method reverts to waiting for a trigger and voice commands can no longer be accepted. The same is the case for commands from the remote control device 15, because it is no longer assured that the user operating the remote control device 15 is in the vicinity of the cooking device 1.

In any case, upon receiving a voice signal or remote control device signal as a control command from a user, the control unit 2 obtains (step 23) a code. Obtaining the code may comprise generating the code or selecting the code from a list of possible codes.

The code is independent of the identity of the user.

In an embodiment, the code is selected from a list of possible codes, e.g. stored in the memory device 11. The control unit 2 ensures that the selected code has not been selected in one or a number of preceding rounds of receiving a voice signal or remote control device signal as a command from a user and accepting that command only upon recognition of the presence of the user. The control unit 2 is then of course also configured to ensure that the selected code is not used for a predetermined following time frame and/or at least one, e.g. a number of further rounds of receiving a voice signal or remote control device signal as a command from a user and accepting that command only upon recognition of the presence of the user. Alternatively, the selection from the list may be a random selection.

Where the code is generated, the code may be generated at random. The code may be a random number, for example, e.g. a random number within a range and/or having a pre-determined number of digits.

The code may be a password that a user can voice. The code need not be a password, but may be some other type of code that can be displayed at the cooking device 1. The code should be comparable with a signal representative of a user's input and receivable by the cooking device 1, at least indirectly (i.e. via a peripheral device in communication with the cooking device 1, such as the remote control device 15).

Depending on the type of code, the code may be displayed (step 24) on the display 7, e.g. as a symbol or alphanumeric code. Such an alphanumeric code may alternatively be displayed on one of the cooking region-specific output devices 8-1, ... 8-6. The code may also be a visible variable aspect of the appearance of the cooking device 1, including a visible identification of a part or region of the cooking device, a color, etc. For example, a selected one of the cooking region-specific output devices 8-1, ... 8-6 may start to blink, the code being the identity of the region. Alternatively, the background color of one of the cooking region-specific output devices 8-1, ... 8-6 and/or the display 7 may be changed, the color representing the code.

In the illustrated embodiment, the user is prompted (step 25) to input the code. The prompt may be provided through the intermediary of the external voice recognition device 13 or another external device, e.g. the user's smart phone or a device comprised in a smart home system. The prompt may in particular be an audible prompt, e.g. speech output. In an embodiment, the step 24 of displaying the code is omitted and the code is output as part of the prompt. However, displaying the code has the effect of ensuring a line of sight between a user and the cooking device 1. The manner in which the step 23 of obtaining the code is implemented ensures that the user cannot guess or memorize the code, but must actually be near enough to see the code.

The control unit 2 then starts (step 26) a timer and waits to receive a signal representative of the user's input. The signal may be voice signal. Thus, the user must audibly express the code, e.g. voice a displayed password, color or the identity of an indicated cooking region 4-1,4-2,4-3. The signal may alternatively be representative of another type of user input provided in a contactless manner. An example would be a gesture, e.g. a gesture recognized by means of the transmitter 17 and receiver 18. The display 7 may, for example, instruct the user to wave a randomly selected number of times or effect one of a list of gestures. Using a signal representative of user input provided in a contactless manner preserves the effect of not requiring the user to touch the cooking device 1. However, it would be possible in principle to display an instruction to the user to place or move an item of cookware into a randomly selected cooking region 4-1,4-2,4-3 or to move or otherwise handle an item of cookware within a randomly selected cooking region 4-1,4-2,4-3.

When a signal representative of the user's input is received, the control unit 2 compares (step 27) the received signal representative of the user's input with the code obtained and displayed (steps 23,24). If the received signal is neither representative of nor can be assigned to the code, then the command that caused the code to be obtained is not executed. If no signal that is representative of or can be assigned to the code is received within a certain time period from the starting of the timer, then the control unit 2 reverts to waiting for a voice signal as a control command from the user.

If the signal is representative of or can be assigned to the code, on the other hand, then the function of the cooking region concerned is adjusted (step 28), e.g. the power supply is adjusted. If the cooking region concerned has not yet been identified or the user has provided a command naming a cooking region, an optional step 29 is carried out to detect the presence of the item of cookware in the cooking region. Thus, the execution of the final step 28 may be conditional upon detecting the item of cookware in a (any) cooking region 4-1,4-2,4-3 or in one to which the control command from the user pertains, as e.g. determined from the voice command. Alternatively or additionally, the step 29 may be used to determine the cooking region 4-1,4-2,4-3, if the user has not specified one or the cooking device 1 is not configured to parse the voice command such as to identify the cooking region.

An embodiment in which acceptance of commands from the communication interface is conditional only on detecting the item of cookware in (any) cooking region 4-1,4-2,4-3 or in one to which the control command from the user pertains, as e.g. determined from the voice command, is also possible. In such an embodiment, the steps 23,24 of obtaining and displaying the code and of comparing (step 27) the received signal representative of the user's input with the code obtained and displayed are not executed.

In each of the embodiments, the presence of the user, in particular within a line of sight to the cooking device 1, is ensured whilst still allowing the user to change settings without touching the cooking device 1. The user interface of the cooking device 1 is extended by allowing for voice control or the use of the remote control device 15, but the user is obliged to provide at least the safety-critical commands whilst present at the cooking device 1.

### LIST OF REFERENCE NUMERALS

- 1: - cooking device
- 2: - control unit
- 3: - cooking area
- 4-1,4-2,4-3: - cooking regions
- 5-1, 5-2, ... 5-n: - induction coils
- 6: - driver
- 7: - display
- 8-1, ... 8-6: - cooking region-specific output devices
- 9: - on/off switch
- 10: - voice control switch
- 11: - memory device
- 12: - interface
- 13: - external voice recognition device
- 14: - further interface
- 15: - remote control device
- 16: - microphone
- 17: - transmitter
- 18: - receiver
- 19: - step (standby)
- 20: - step (await signal)
- 21: - step (detect region)
- 22: step (start timer)
- 23: - step (obtain code)
- 24: - step (display code)
- 25: - step (provide prompt)
- 26: - step (start timer)
- 27: step (compare received input and code)
- 28: - step (change function of region)
- 29: - step (detect region)

## Claims

1. A cooking device with at least one cooking region (4-1,4-2,4-3) comprising:
a control unit (2) configured to be coupled with a communication interface (12,14,16) for receiving voice signals as control commands from a user or data signals as control commands from a remote control device (15),
wherein the control unit (2) is configured for controlling a power supply to the at least one cooking region (4-1,4-2,4-3),
wherein the control unit (2) is configured to accept commands from the communication interface (12,16) only upon recognition of the presence of the user,
**characterized in that**
the control unit (2) is configured to access a list of passwords, and to select one password from said list of passwords at a time, e.g. in a randomized manner, from said list of passwords and display said password on a display (7) of the cooking device to a user, and
the control unit (2) is configured to compare a signal, received from the communication interface (12,14,16), with said password and, if the received signal is representative and/or can be assigned to said displayed selected password of the list of passwords, a respective command to change the cooking region (4-1,4-2,4-3) or a function of the cooking device is executed.

2. The cooking device of claim 1, wherein the control unit (2) is configured to accept voice signals from the communication interface (12,14,16) only within a predetermined time interval between the detection of the presence of a user and the receipt of the said voice signals.

3. The cooking device of claim 1 or 2, wherein the predetermined time interval is between 5 sand 60 s, preferably between 10 s and 40 s, most preferred between 20 s and 30 s.

4. The cooking device of any one of the preceding claims, wherein the control unit (2) is configured to accept voice signals from the communication interface (12,14,16) only upon recognition of a code by the communication interface (12,14,16).

5. The cooking device of claim 4, comprising a memory (11) for storing one or more codes.

6. The cooking device of any one of the preceding claims, wherein the control unit (2) is configured to prompt a user to input a code perceptible at the cooking device and to compare a received signal representative of the user's input with the code,
wherein the control unit (2) is configured to cause a command from the communication interface (12,14,16) to be executed if the received signal is representative of and/or can be assigned to the code and not to be executed if the received signal is neither representative of nor can be as- signed to the code, and
wherein the code is a randomized code and/or the control unit (2) is configured to access a list of codes, to select the code by selecting at least one of the list of codes at a time and to ensure that the at least one selected code is not used for a predetermined time frame and/or for at least one further round, e.g. a number of further rounds, of receiving a voice signal as a command from the user or a data signal as a control command from the remote control device (15) and accepting that command only upon recognition of the presence of the user.

7. The cooking device of claim 6, wherein the code is a password,
wherein the control unit (2) is configured to prompt the user to voice the password, and
wherein the control unit (2) is configured to receive the signal representative of the user's input from the communication interface (12,14,16).

8. The cooking device of claim 6 or 7, further comprising a display (7),
wherein the control unit (2) is configured to cause the code to be displayed on the display (7).

9. The cooking device of claim 1, wherein the control unit (2) is configured to display said password for a predetermined time period.

10. The cooking device of any one of the preceding claims,
wherein the cooking region (4-1,4-2,4-3) is a variable assignment of one or more induction coils (5-1, 5-2, ..., 5-n).

11. The cooking device of any one of the preceding claims, comprising means (17,18) for determining that a user is present that further comprise a proximity sensor, a motion sensor and/or a touch sensitive element.

12. The cooking device of any one of the preceding claims, further comprising cookware detection means (5-1, 5-2,..., 5-n,6) for detecting the placement of cookware in at least one of the at least one cooking regions (4-1,4-2,4-3),
wherein the control unit (2) is configured to control the power supply to the at least one cooking regions (4-1,4-2,4-3) based on the detection of a change in placement of cookware in the at least one cooking region (4-1,4-2,4-3) and subsequent or preceding receipt of voice signals or data signals by the communication interface (12,16).

13. The cooking device of claim 12, configured such that acceptance of voice signals or data signals is triggered by the placement or movement of cookware onto or within a cooking region (4-1,4-2,4-3).

14. The cooking device according to claim 12 or 13, comprising multiple cooking regions (4-1,4-2,4-3) and configured such that, upon an item of cookware having been detected by the cookware detection means (5-1, 5-2, ..., 5- n,6), a timed input interval is triggered in which a user can provide voice signals or the remote control device (15) can provide data signals as control commands,
wherein the cooking region (4-1,4-2,4-3) to which the voice signals or data signals are applied is determined by the cookware detection means (5-1, 5-2, ... 5-n,6).

15. A cooking system with a cooking device (1) according to any one of claims 1 to 14, comprising a voice recognition device and/or a remote control device (15) configured for communication with the control unit (2) via the communication interface (12,14,16).

16. The cooking system of claim 15, comprising an external voice recognition device (13).

17. The cooking system of claim 16, wherein the external voice recognition device (13) is a mobile phone or a device that is part of or communicates with a smart home system or a remote control station.

18. The cooking system of claim 15, wherein the communication interface comprises a microphone (16) that is provided at the cooking device (1).

19. Computer program product comprising instructions which, when executed by a control unit (2) in a cooking device (1) with at least one cooking region (4-1,4-2,4-3) and comprising the control unit (2), configured to be coupled with a communication interface (12,16) for receiving voice signals as control commands from a user or data signals as control commands from a remote control device (15) and for controlling a power supply to the at least one cooking region (4-1,4-2,4-3), provide the cooking device (1) with the functionality of a cooking device according to any one of claims 1-14.

## Patentansprüche

1. Kochvorrichtung mit mindestens einem Kochbereich (4-1, 4-2, 4-3), umfassend:
eine Steuereinheit (2), die dazu konfiguriert ist, mit einer Kommunikationsschnittstelle (12, 14, 16) zum Empfangen von Sprachsignalen als Steuerbefehle von einem Benutzer oder Datensignalen als Steuerbefehle von einer Fernbedienungsvorrichtung (15) gekoppelt zu werden,
wobei die Steuereinheit (2) zum Steuern einer Stromversorgung für den mindestens einen Kochbereich (4-1, 4-2, 4-3) konfiguriert ist,
wobei die Steuereinheit (2) dazu konfiguriert ist, Befehle von der Kommunikationsschnittstelle (12, 16) nur bei Erkennung der Anwesenheit des Benutzers anzunehmen,
**dadurch gekennzeichnet, dass**
die Steuereinheit (2) dazu konfiguriert ist, auf eine Liste von Kennwörtern zuzugreifen und jeweils ein Kennwort aus der Liste von Kennwörtern, z. B. zufällig aus der Liste von Kennwörtern, auszuwählen und das Kennwort auf einer Anzeige (7) der Kochvorrichtung einem Benutzer anzuzeigen, und
die Steuereinheit (2) dazu konfiguriert ist, ein von der Kommunikationsschnittstelle (12, 14, 16) empfangenes Signal mit dem Kennwort zu vergleichen, und ein entsprechender Befehl zum Ändern des Kochbereichs (4-1, 4-2, 4-3) oder einer Funktion der Kochvorrichtung ausgeführt wird, falls das empfangene Signal das angezeigte ausgewählte Kennwort der Liste von Kennwörtern darstellt und/oder diesem zugeordnet werden kann.

2. Kochvorrichtung nach Anspruch 1, wobei die Steuereinheit (2) dazu konfiguriert ist, Sprachsignale von der Kommunikationsschnittstelle (12, 14, 16) nur innerhalb eines vorbestimmten Zeitintervalls zwischen der Erkennung der Anwesenheit eines Benutzers und dem Empfang der Sprachsignale anzunehmen.

3. Kochvorrichtung nach Anspruch 1 oder 2, wobei das vorbestimmte Zeitintervall zwischen 5 s und 60 s, vorzugsweise zwischen 10 s und 40 s, am meisten bevorzugt zwischen 20 s und 30 s liegt.

4. Kochvorrichtung nach einem der vorhergehenden Ansprüche, wobei die Steuereinheit (2) dazu konfiguriert ist, Sprachsignale von der Kommunikationsschnittstelle (12, 14, 16) nur bei Erkennung eines Codes durch die Kommunikationsschnittstelle (12, 14, 16) anzunehmen.

5. Kochvorrichtung nach Anspruch 4, umfassend einen Speicher (11) zum Speichern eines oder mehrerer Codes.

6. Kochvorrichtung nach einem der vorhergehenden Ansprüche, wobei die Steuereinheit (2) dazu konfiguriert ist, einen Benutzer aufzufordern, einen an der Kochvorrichtung wahrnehmbaren Code einzugeben und ein empfangenes Signal, das die Benutzereingabe darstellt, mit dem Code zu vergleichen,
wobei die Steuereinheit (2) dazu konfiguriert ist, zu veranlassen, dass ein Befehl von der Kommunikationsschnittstelle (12, 14, 16) ausgeführt wird, falls das empfangene Signal den Code darstellt und/oder diesem zugeordnet werden kann, und nicht ausgeführt wird, falls das empfangene Signal weder den Code darstellt noch diesem zugeordnet werden kann, und wobei der Code ein Zufallscode ist und/oder die Steuereinheit (2) dazu konfiguriert ist, auf eine Liste von Codes zuzugreifen, den Code auszuwählen, indem sie jeweils mindestens einen aus der Liste von Codes auswählt, und sicherzustellen, dass der mindestens eine ausgewählte Code für einen vorbestimmten Zeitrahmen und/oder für mindestens eine weitere Runde, z. B. eine Anzahl weiterer Runden, des Empfangs eines Sprachsignals als Befehl von dem Benutzer oder eines Datensignals als Steuerbefehl von der Fernbedienungsvorrichtung (15) nicht verwendet wird und dieser Befehl nur bei Erkennung der Anwesenheit des Benutzers angenommen wird.

7. Kochvorrichtung nach Anspruch 6, wobei der Code ein Kennwort ist,
wobei die Steuereinheit (2) dazu konfiguriert ist, den Benutzer aufzufordern, das Kennwort auszusprechen, und wobei die Steuereinheit (2) dazu konfiguriert ist, das Signal, das die Benutzereingabe darstellt, von der Kommunikationsschnittstelle (12, 14, 16) zu empfangen.

8. Kochvorrichtung nach Anspruch 6 oder 7, ferner umfassend eine Anzeige (7),
wobei die Steuereinheit (2) dazu konfiguriert ist, zu veranlassen, dass der Code auf der Anzeige (7) angezeigt wird.

9. Kochvorrichtung nach Anspruch 1, wobei die Steuereinheit (2) dazu konfiguriert ist, das Kennwort für einen vorbestimmten Zeitraum anzuzeigen.

10. Kochvorrichtung nach einem der vorhergehenden Ansprüche, wobei der Kochbereich (4-1, 4-2, 4-3) eine variable Zuordnung einer oder mehrerer Induktionsspulen (5-1, 5-2, ..., 5-n) ist.

11. Kochvorrichtung nach einem der vorhergehenden Ansprüche, umfassend Mittel (17, 18) zum Bestimmen, dass ein Benutzer anwesend ist, die ferner einen Näherungssensor, einen Bewegungssensor und/oder ein berührungsempfindliches Element umfassen.

12. Kochvorrichtung nach einem der vorhergehenden Ansprüche, ferner umfassend Kochgeschirrerkennungsmittel (5-1, 5-2, ..., 5-n, 6) zum Erkennen der Platzierung von Kochgeschirr in mindestens einem des mindestens einen Kochbereichs (4-1, 4-2, 4-3),
wobei die Steuereinheit (2) dazu konfiguriert ist, die Stromversorgung für den mindestens einen Kochbereich (4-1, 4-2, 4-3) basierend auf der Erkennung einer Änderung der Platzierung von Kochgeschirr in dem mindestens einen Kochbereich (4-1, 4-2, 4-3) und dem nachfolgenden oder vorhergehenden Empfang von Sprach- oder Datensignalen durch die Kommunikationsschnittstelle (12, 16) zu steuern.

13. Kochvorrichtung nach Anspruch 12, derart konfiguriert, dass die Annahme von Sprach- oder Datensignalen durch die Platzierung oder Bewegung von Kochgeschirr auf einem bzw. auf einen Kochbereich (4-1, 4-2, 4-3) oder innerhalb desselben ausgelöst wird.

14. Kochvorrichtung nach Anspruch 12 oder 13, umfassend mehrere Kochbereiche (4-1, 4-2, 4-3) und derart konfiguriert, dass bei Erkennung eines Kochgeschirrelements durch die Kochgeschirrerkennungsmittel (5-1, 5-2, ..., 5-n, 6) ein zeitlich festgelegtes Eingabeintervall ausgelöst wird, in dem als Steuerbefehle ein Benutzer Sprachsignale bereitstellen kann oder die Fernbedienungsvorrichtung (15) Datensignale bereitstellen kann;
wobei der Kochbereich (4-1,4-2,4-3), auf den die Sprach- oder Datensignale angewendet werden, durch die Kochgeschirrerkennungsmittel (5-1, 5-2, ... 5-n, 6) bestimmt wird.

15. Kochsystem mit einer Kochvorrichtung (1) nach einem der Ansprüche 1 bis 14, umfassend eine Spracherkennungsvorrichtung und/oder eine Fernbedienungsvorrichtung (15), die zur Kommunikation mit der Steuereinheit (2) über die Kommunikationsschnittstelle (12, 14, 16) konfiguriert sind.

16. Kochsystem nach Anspruch 15, umfassend eine externe Spracherkennungsvorrichtung (13).

17. Kochsystem nach Anspruch 16, wobei die externe Spracherkennungsvorrichtung (13) ein Mobiltelefon oder eine Vorrichtung ist, die Teil eines Smart-Home-Systems oder einer Fernbedienungsstation ist oder damit kommuniziert.

18. Kochsystem nach Anspruch 15, wobei die Kommunikationsschnittstelle ein Mikrofon (16) umfasst, das an der Kochvorrichtung (1) vorgesehen ist.

19. Computerprogrammprodukt, umfassend Anweisungen, die die Kochvorrichtung (1) mit der Funktionalität einer Kochvorrichtung nach einem der Ansprüche 1-14 versehen, wenn sie von einer Steuereinheit (2) in einer Kochvorrichtung (1) mit mindestens einem Kochbereich (4-1, 4-2, 4-3) ausgeführt werden, und umfassen, dass die Steuereinheit (2) dazu konfiguriert ist, mit einer Kommunikationsschnittstelle (12, 16) zum Empfangen von Sprachsignalen als Steuerbefehle von einem Benutzer oder Datensignalen als Steuerbefehle von einer Fernbedienungsvorrichtung (15) und zum Steuern einer Stromversorgung für den mindestens einen Kochbereich (4-1, 4-2, 4-3) gekoppelt zu werden.

## Revendications

1. Appareil de cuisson avec au moins une zone de cuisson (4-1, 4-2, 4-3) comprenant :
une unité de commande (2) configurée pour être couplée à une interface de communication (12, 14, 16) pour recevoir des signaux vocaux en tant qu'ordres de commande provenant d'un utilisateur ou des signaux de données en tant qu'ordres de commande provenant d'un dispositif de commande à distance (15),
l'unité de commande (2) étant conçue pour commander une alimentation électrique de l'au moins une zone de cuisson (4-1, 4-2, 4-3),
l'unité de commande (2) étant configurée pour n'accepter des ordres en provenance de l'interface de communication (12, 16) que lors de la reconnaissance de la présence de l'utilisateur,
**caractérisé en ce que**
l'unité de commande (2) est configurée pour accéder à une liste de mots de passe et pour sélectionner un mot de passe à la fois dans ladite liste de mots de passe, par exemple de manière aléatoire, à partir de ladite liste de mots de passe et pour afficher ledit mot de passe sur un écran (7) de l'appareil de cuisson à destination d'un utilisateur, et
l'unité de commande (2) est configurée pour comparer un signal reçu de l'interface de communication (12, 14, 16) avec ledit mot de passe et, si le signal reçu est représentatif et/ou peut être affecté audit mot de passe sélectionné affiché de la liste de mots de passe, un ordre respectif de changement de zone de cuisson (4-1, 4-2, 4-3) ou une fonction de l'appareil de cuisson est exécuté.

2. Appareil de cuisson selon la revendication 1, dans lequel l'unité de commande (2) est configurée pour n'accepter des signaux vocaux en provenance de l'interface de communication (12, 14, 16) que dans un intervalle de temps prédéterminé entre la détection de la présence d'un utilisateur et la réception desdits signaux vocaux.

3. Appareil de cuisson selon la revendication 1 ou 2, dans lequel l'intervalle de temps prédéterminé est compris entre 5 et 60 s, de préférence entre 10 et 40 s, et plus particulièrement entre 20 et 30 s.

4. Appareil de cuisson selon l'une quelconque des revendications précédentes, dans lequel l'unité de commande (2) est configurée pour n'accepter des signaux vocaux en provenance de l'interface de communication (12, 14, 16) que lors de la reconnaissance d'un code par l'interface de communication (12, 14, 16).

5. Appareil de cuisson selon la revendication 4, comprenant une mémoire (11) pour stocker un ou plusieurs codes.

6. Dispositif de cuisson selon l'une quelconque des revendications précédentes, dans lequel l'unité de commande (2) est configurée pour inviter un utilisateur à entrer un code perceptible au niveau du dispositif de cuisson et pour comparer un signal reçu représentatif de l'entrée de l'utilisateur avec le code,
l'unité de commande (2) étant configurée pour provoquer l'exécution d'un ordre provenant de l'interface de communication (12, 14, 16) si le signal reçu est représentatif du code et/ou peut être affecté au code et sa non exécution si le signal reçu n'est par représentatif du code et ne peut être affecté au code, et
le code étant un code aléatoire et/ou l'unité de commande (2) étant configurée pour accéder à une liste de codes, pour sélectionner le code en sélectionnant au moins un code à la fois de la liste de codes et pour s'assurer que l'au moins un code sélectionné n'est pas utilisé pendant un laps de temps prédéterminé et/ou pour au moins un tour supplémentaire, par exemple un certain nombre de tours supplémentaires, de réception d'un signal vocal en tant que ordre provenant de l'utilisateur ou d'un signal de données en tant qu'ordre de commande provenant du dispositif de commande à distance (15) et d'acceptation de cet ordre uniquement après reconnaissance de la présence de l'utilisateur.

7. Appareil de cuisson selon la revendication 6, dans lequel le code est un mot de passe,
l'unité de commande (2) étant configurée pour inviter l'utilisateur à prononcer le mot de passe, et
l'unité de commande (2) étant configurée pour recevoir le signal représentatif de l'entrée de l'utilisateur en provenance de l'interface de communication (12, 14, 16).

8. Appareil de cuisson selon la revendication 6 ou 7, comprenant en outre un écran (7),
l'unité de commande (2) étant configurée pour provoquer l'affichage du code sur l'écran (7).

9. Appareil de cuisson selon la revendication 1, dans lequel l'unité de commande (2) est configurée pour afficher ledit mot de passe pendant une période de temps prédéterminée.

10. Appareil de cuisson selon l'une quelconque des revendications précédentes,
dans lequel la zone de cuisson (4-1, 4-2, 4-3) est une affectation variable d'une ou plusieurs bobines d'induction (5-1, 5-2, ..., 5-n).

11. Appareil de cuisson selon l'une quelconque des revendications précédentes, comprenant des moyens (17, 18) pour déterminer qu'un utilisateur est présent, qui comprennent en outre un capteur de proximité, un capteur de mouvement et/ou un élément tactile.

12. Appareil de cuisson selon l'une quelconque des revendications précédentes, comprenant en outre des moyens de détection d'ustensiles de cuisson (5-1, 5-2, ..., 5-n, 6) pour détecter le placement d'ustensiles de cuisson dans au moins l'une de la ou des zones de cuisson (4-1, 4-2, 4-3),
l'unité de commande (2) étant configurée pour commander l'alimentation électrique de la ou des zones de cuisson (4-1, 4-2, 4-3) sur la base de la détection d'un changement de placement d'ustensiles de cuisson dans la ou les zones de cuisson (4-1, 4-2, 4-3) et de la réception ultérieure ou antérieure de signaux vocaux ou de signaux de données par l'interface de communication (12, 16).

13. Appareil de cuisson selon la revendication 12, configuré de telle sorte que l'acceptation de signaux vocaux ou de signaux de données soit déclenchée par le placement ou le déplacement d'ustensiles de cuisson sur ou à l'intérieur d'une zone de cuisson (4-1, 4-2, 4-3).

14. Appareil de cuisson selon la revendication 12 ou 13, comportant plusieurs zones de cuisson (4-1, 4-2, 4-3) et configuré de telle sorte que, lorsqu'un ustensile de cuisson a été détecté par les moyens de détection d'ustensiles de cuisson (5-1, 5-2, ..., 5-n, 6), un intervalle d'entrée temporisé soit déclenché, au cours duquel un utilisateur peut fournir des signaux vocaux ou le dispositif de télécommande (15) peut fournir des signaux de données en tant qu'ordres de commande,
la zone de cuisson (4-1, 4-2, 4-3) à laquelle sont appliqués les signaux vocaux ou les signaux de données est déterminée par les moyens de détection d'ustensiles de cuisson (5-1, 5-2, ... 5-n, 6).

15. Système de cuisson ayant un appareil de cuisson (1) selon l'une quelconque des revendications 1 à 14, comprenant un dispositif de reconnaissance vocale et/ou un dispositif de commande à distance (15) configuré pour communiquer avec l'unité de commande (2) par l'intermédiaire de l'interface de communication (12, 14, 16).

16. Système de cuisson selon la revendication 15, comprenant un dispositif de reconnaissance vocale externe (13).

17. Système de cuisson selon la revendication 16, dans lequel le dispositif de reconnaissance vocale externe (13) est un téléphone mobile ou un dispositif qui fait partie d'un système domestique intelligent ou d'une station de commande à distance ou qui communique avec celui ou celle-ci.

18. Système de cuisson selon la revendication 15, dans lequel l'interface de communication comprend un microphone (16) qui est prévu au niveau de l'appareil de cuisson (1).

19. Produit de programme informatique comprenant des instructions qui, lorsqu'elles sont exécutées par une unité de commande (2) dans un appareil de cuisson (1) ayant au moins une zone de cuisson (4-1, 4-2, 4-3) et comprenant l'unité de commande (2), configurée pour être couplée à une interface de communication (12, 16) pour recevoir des signaux vocaux en tant qu'ordres de commande provenant d'un utilisateur ou des signaux de données en tant qu'ordres de commande provenant d'un dispositif de commande à distance (15) et pour commander l'alimentation électrique de la ou des zones de cuisson (4-1, 4-2, 4-3), confèrent à l'appareil de cuisson (1) la fonctionnalité d'un appareil de cuisson selon l'une quelconque des revendications 1 à 14.
